# EUROPEAN PATENT SPECIFICATION

(11) **EP 4 057 224 B1**
(45) Date of publication and mention of the grant of the patent: **18.12.2024**
(21) Application number: 22160260.0
(22) Date of filing: 04.03.2022
(51) Int. Cl.: G06T 7/33, G06T 7/246, G06T 3/00, G01C 21/16, G01S 17/42, G01S 17/86, G01S 17/89, G06T 3/14

(54) **OPTICAL DATA PROCESSING APPARATUS, OPTICAL DATA PROCESSING METHOD AND OPTICAL DATA PROCESSING PROGRAM**
VORRICHTUNG, VERFAHREN UND PROGRAMM ZUR OPTISCHEN DATENVERARBEITUNG
APPAREIL DE TRAITEMENT DE DONNÉES OPTIQUES, PROCÉDÉ DE TRAITEMENT DE DONNÉES ET PROGRAMME DE TRAITEMENT DE DONNÉES OPTIQUES

(30) Priority: 08.03.2021 JP 2021036523
(43) Date of publication of application: 14.09.2022
(73) Proprietor: TOPCON CORPORATION, Tokyo 174-8580 (JP)
(72) Inventor: SASAKI, You, Tokyo, 174-8580 (JP)
(74) Representative: Eisenführ Speiser

(56) References cited:
- CN-A- 111 083 309
- US-A1- 2019 120 948
- FLORIAN TSCHOPP ET AL: "VersaVIS: An Open Versatile Multi-Camera Visual-Inertial Sensor Suite", ARXIV.ORG, CORNELL UNIVERSITY LIBRARY, 201 OLIN LIBRARY CORNELL UNIVERSITY ITHACA, NY 14853, 5 December 2019 (2019-12-05), XP081545855

## Description

### Technical Field

The present invention relates to a technique for synchronizing among multiple optical data.

### Background Art

A technique is known in which a measuring device such as laser scanner, camera, GNSS position measuring unit, IMU or the like is mounted on a moving body so that the circumjacent area thereof is three-dimensionally measured while moving (see Patent document 1).

Patent document 1: Japanese Unexamined Patent Application Publication No. 2016-57108.

CN 111083309 A discloses a time alignment method for multi-sensor data and data acquisition equipment, and the method comprises the steps: determining a reference sensor from a plurality of sensors, wherein the reference sensor has the longest transmission time when the reference sensor transmits data to a processor; determining a difference value between the transmission time of each sensor except the reference sensor in the plurality of sensors and the transmission time of the reference sensor; for any target sensor except the reference sensor, correcting the receiving moment of first acquired data acquired by the reference sensor by using the difference value corresponding to the target sensor to obtain a new receiving moment of the first acquired data, and determining second acquired data and the first acquired data as synchronous data, wherein the second acquired data is data acquired by the target sensor, and the receiving moment of the second acquired data is the same as the new receiving moment of the first acquired data. According to the method, the time alignment precision of the multi-sensor data can be improved, so that the environmental data acquired by each sensor is unified.

US 2019/0120948 A1 discloses a method and system for synchronizing a lidar and a camera on an autonomous vehicle. The system selects a plurality of track samples for a route including a lidar scan and an image. For each track sample, the system calculates a time shift by iterating many time deltas. For each time delta, the system adjusts a camera timestamp by that time delta, projects a lidar scan onto the image as a lidar projection according to the adjusted camera timestamp, and calculates an alignment score of the lidar projection for that time delta. The system defines the time shift for each track sample as the time delta with the highest alignment score. The system then models time drift of the camera compared to the lidar based on the calculated time shifts for the track samples and synchronizes the lidar and the camera according to the modeled time drift.

### Summary of the Invention

In the above technique of patent document 1, for example, a laser scan point cloud (laser scan data) obtained by a laser scanner and a photographed image photographed by a camera need to be processed by synchronization in order to compare them and to make them consistent.

As a method of synchronization, a method is employed in which a photographing command signal is output to a camera, an exposure signal (a signal indicating the time when the shutter is actually clicked) is output from the camera, thereby controlling the time the photographed image was taken based on the exposure signal.

In the above method using the exposure signal, it is necessary that a function of outputting the exposure signal be at the camera side, and furthermore, it is necessary to set handling of the exposure signal at the controlling side. Furthermore, a signal transmitting means to handle the exposure signal is also necessary.

Therefore, overall cost is increased and versatility as a system is decreased. Furthermore, there may be serious limitations, and usability as a system may be inferior in a case in which a camera prepared by a user is used.

In view of such circumstances, an object of the present invention is to provide a technique in which synchronization among multiple optical data is possible by a facilitated method.

The present invention is an optical data processing apparatus, including: an optical data obtaining part which obtains a laser scan point cloud obtained by a laser scanner mounted on a moving body in a moving condition, and image data of a photographed image photographed by a camera mounted on the moving body in a moving condition; a point cloud feature point calculating part that extracts, from the laser scan point cloud, feature points of an object from which the laser scan point cloud is obtained, and then calculates a point cloud feature point image by imaging the extracted feature points; a delay time obtaining part which obtains Δt in a case in which the camera photographs with a delay of Δt if the camera is commanded to take a photograph at time T; and a projection part which makes a projection image, the projection image made by overlapping and projecting the point cloud feature point image as viewed from a specific viewpoint and an image feature point image, in a state in which directions of viewing lines are aligned, the image feature point image obtained by extracting feature points from the photographed image, in which relationships of exterior orientation elements of the laser scanner and the camera in the moving body are known, the projection is performed multiple times by changing a viewpoint position of at least one of the point cloud feature point image and the image feature point image so that multiple projection images are made, and Δt is calculated in conditions in which difference in overlapping degree of the point cloud feature point image and the image feature point image in the multiple made projection images is minimal or is not greater than a threshold value.

In the present invention, the following embodiment can be mentioned, in which the apparatus further comprises a camera position calculating part which calculates camera position in photographing of the photographed image by a single photograph orientation based on correspondence relationships of the laser scan point cloud and the photographed image, a reference value of Δt is calculated based on difference between a time at which a command for photographing the photographed image is output and a time the camera position is calculated, and a range of viewpoint positions is selected based on the reference value of Δt.

In the present invention, the following embodiment can be mentioned, in which a specific range having a center position corresponding to the reference value of Δt is selected as the range of viewpoints. In the present invention, the following embodiment can be mentioned, wherein the point cloud feature point image is calculated by extracting feature points that characterize a shape of a three-dimensional model generated based on the laser scan point cloud. In the present invention, the following embodiment can be mentioned, in which each time a setting of a camera is changed, Δt is obtained.

The present invention can also be understood as an optical data processing method including: a step of obtaining a laser scan point cloud obtained by a laser scanner mounted on a moving body in a moving condition, and image data of a photographed image photographed by a camera mounted on the moving body in a moving condition; a step of extracting, from the laser scan point cloud, feature points of an object from which the laser scan point cloud is obtained, and then calculating a point cloud feature point image by imaging the extracted feature points; a step of obtaining Δt when the camera photographs with a delay Δt when the camera is commanded to take a photograph at time T; and a step of making a projection image, the projection image made by overlapping and projecting the point cloud feature point image as viewed from a specific viewpoint and an image feature point image, in a state in which directions of viewing lines are aligned, the image feature point image obtained by extracting feature points from the photographed image, in which relationships of exterior orientation elements of the laser scanner and the camera on the moving body are known, the projection performed multiple times by changing viewpoint position of at least one of the point cloud feature point image and the image feature point image so that multiple projection images are made, and Δt is calculated in a condition in which difference in overlapping degree of the point cloud feature point image and the image feature point image in the multiple made projection images is minimal or is not more than a threshold value.

The present invention can also be understood as an optical data processing program, which is a program read by a computer so that the computer executes the following steps, comprising: a step of obtaining a laser scan point cloud obtained by a laser scanner mounted on a moving body in a moving condition and image data of a photographed image photographed by a camera mounted on the moving body in a moving condition; a step of extracting, from the laser scan point cloud, feature points of an object from which the laser scan point cloud is obtained, and then calculating a point cloud feature point image by imaging the extracted feature points; a step of obtaining Δt when the camera photographs with a delay Δt when the camera is commanded to photograph at time T; and a step of making a projection image, the projection image made by overlapping and projecting the point cloud feature point image as viewed from a specific viewpoint and an image feature point image, in a state in which directions of viewing lines are aligned, the image feature point image obtained by extracting feature points from the photographed image, in which relationships of exterior orientation elements of the laser scanner and the camera in the moving body are known, the projection performed multiple times by changing viewpoint position of at least one of the point cloud feature point image and the image feature point image so that multiple projection images are made, and Δt is calculated in conditions in which difference in overlapping degree of the point cloud feature point image and the image feature point image in the multiple made projection images is minimal or is not greater than a threshold value.

### Effects of the Invention

According to the present invention, synchronizing among multiple optical data is possible by a facilitated method.

### Brief Description of Drawings

Fig. 1 is a conceptual diagram of an example.
Fig. 2 is an imaging diagram showing misalignment between a photographed image and a point cloud image.
Fig. 3 is an imaging diagram showing point cloud images in which each viewpoint is different.
Fig. 4 is an imaging diagram showing misalignments of a photographed image and a point cloud image as time passes.
Fig. 5 is a block diagram of the invention.
Fig. 6 is a diagram showing a principle (single photograph orientation (backward intersection method)) calculating exterior orientation elements of a camera.
Fig. 7 is a flowchart diagram showing an example of steps of a process.
Fig. 8 is a flowchart diagram showing an example of steps of a process.

Examples useful for understanding the Invention Below examples are presented whereby a viewpoint of a point cloud image and/or a photographic image is shifted such as it photograped with some time delay. These examples are useful for understanding the invention. However, according to the invention the point cloud image and photographed image themselves are not used; instead, the point cloud feature point image and the image feature point image are used as the point cloud image and the photographed image.

### (Concept)

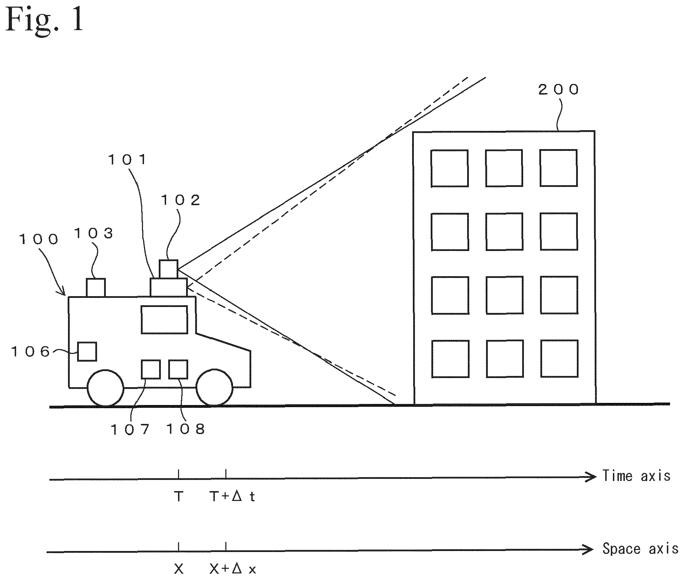

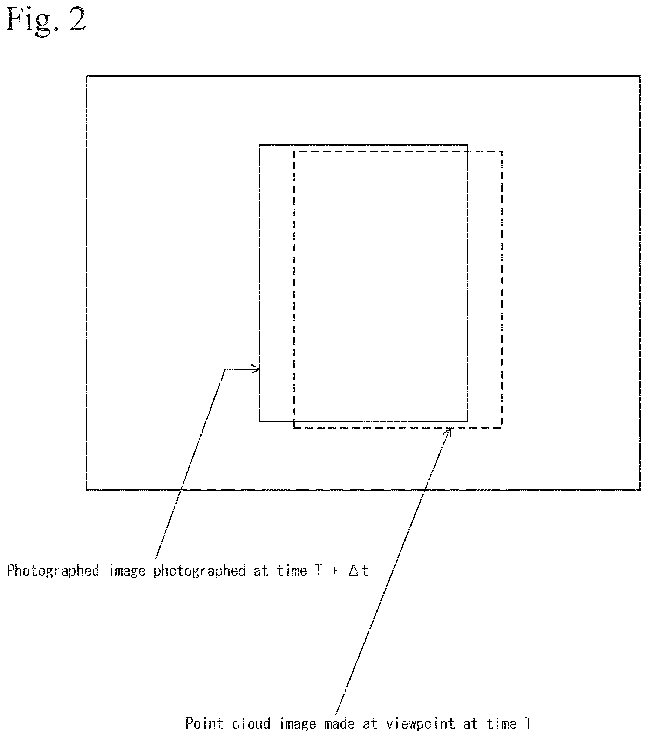

Fig. 1 is a conceptual diagram. Fig. 2 is an imaging diagram showing a situation of superposition of a point cloud image and a photographed image. In this example, a camera 101 and a laser scanner 102 are mounted on a vehicle 100. While the vehicle 10 travels, photographing by the camera 101 and laser scanning by the laser scanner 102 are performed with respect to an object 200.

Here, a photographing command signal is output to the camera 101, the signal is received by the camera 101, and the camera 101 takes a photograph. The camera 101 does not output an exposure signal or any other corresponding signal, that is, a signal determining a timing of photographing. As the camera 101, one that outputs the exposure signal or other corresponding signal can be employed. In this case, since no exposure signal is utilized, no hardware or setting for the signal is necessary.

There is a delay time Δt between a timing camera 101 receives the photographing command signal and a timing camera 101 takes a photograph. At the first step, the delay time Δt is unknown. The delay results from a time required for necessary processes of photographing in the camera 101. The Δt varies depending on kind or model of the camera. Furthermore, there may be a case in which the values of Δt differ from each other depending on differences of action mode or photographing conditions, even if the cameras are of the same type.

With respect to laser scanner 102, emitting time of laser scanning light and receiving time of laser scanning light reflected from the object are controlled. As a clock for these timings, for example, a clock installed in a GNSS positioning measuring unit 103 may be used.

Here, relationships of positions and orientations among camera 101, laser scanner 102, GNSS position measuring unit 103, and IMU 106 in vehicle 100 are preliminarily obtained and are known. It should be noted that in a case in which exterior orientation elements (position and orientation) of camera 101 are unknown, by a method as explained below, position and orientation of the camera 101 in the vehicle 100 are obtained first, and a process explained below is performed. Of course, the exterior orientation elements of the camera 101 of the vehicle 100 may be known from the beginning.

First, it is assumed that in a situation in which the vehicle 100 is moving, the photographing command signal is output to the camera 101 at a time T. That is, the camera 101 is commanded to take a picture at time T.

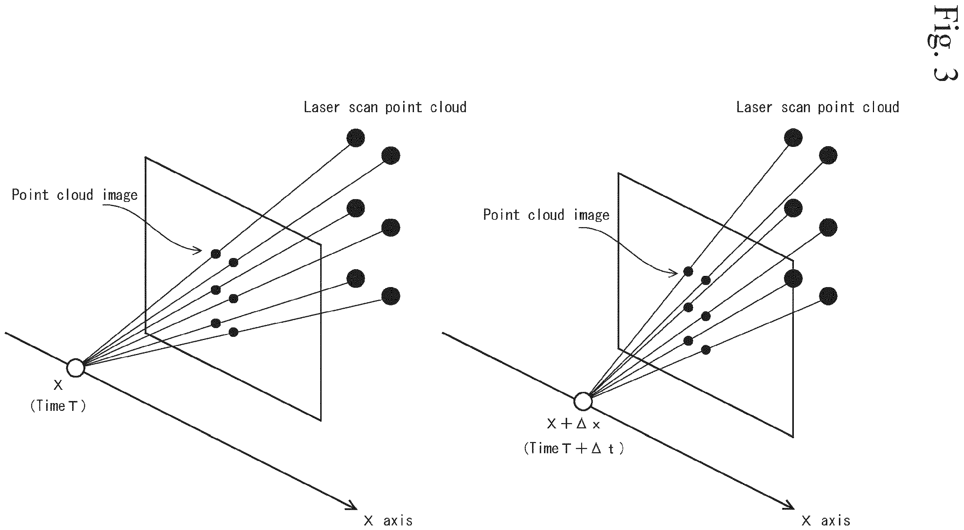

Subsequently, by post-processing, based on a laser scan point cloud obtained by the laser scanner 102, a point cloud image which is viewed from a position at the time T is generated. This point cloud image is an image showing a condition of distribution of a point cloud of visual appearance viewed from a position X at the time T. Here, as the position X, position of projection origin (optical origin) of the camera 101 at the time T is employed. Fig. 3 shows an image in which the point cloud image viewed from the position X at the time T is obtained.

The position of the above viewpoint and the time are measured. That is, the position of the vehicle 100 is positioned by the GNSS position measuring unit 103, change of its velocity and change of its direction are measured by the IMU 106, and rotation of a wheel of the vehicle 100 is measured by a wheel encoder 107. Based on these measured values, the position of the viewpoint of a point cloud image can be known. Furthermore, since time of positioning can also be obtained by the GNSS, the time linked to the positioning can also be obtained. Therefore, position of the above viewpoint on the moving vehicle 100 and the time at the position can be obtained.

The time of outputting a photographing command signal from an operational unit 108 and the time of receiving the signal at the camera 101 can be regarded as being the same. Here, it is assumed that the photographing command signal is output at the time T. In this case, the camera 101 takes a photograph after a delay Δt. It should be noted that the photographing time is defined by the time of the beginning of exposure. As the photographing time, an intermediate time during the exposure, or a completion time of the exposure can be employed.

Fig. 2 shows a situation in which the point cloud image which is made viewed from a position at time T based on a laser scan point cloud obtained by the laser scanner 102 and the photographed image which is photographed by the camera 101 at the time T+Δt by the photographing command at the time T are superposed (a situation in which they are projected overlapped).

Here, the external orientation elements of the laser scanner 102 and the camera 101 in the vehicle 100 are known. Therefore, the point cloud image based on the laser scan point cloud obtained by the laser scanner 102 can be generated by accommodating with optical axis direction of the image photographed by the camera 101 and by viewing from the position assuming there is a projection origin (optical origin) of the camera 101.

If the camera 101 took a photograph at time T, the point cloud image and photographed image perfectly overlap in an ideal case.

In the case of Fig. 2, since there is the delay time Δt in the action of the camera 101 side, if the point cloud image based on the laser scan point cloud obtained by the laser scanner 102 at time T and the photographed image photographed by the camera 101 are superposed, there is a misalignment between them. It should be noted that unless the vehicle moves, misalignment in Fig. 2 does not occur even if 0<Δt.

If the exposure signal is output from the camera 101, since Δt can be known, by moving one of the images along a time axis, that is, by moving the viewpoint of one of the images at a distance corresponding to Δt, the two images can overlap so as not to be misaligned. That is, they can be synchronized. In a conventional technique, synchronizing of a photographed image photographed by a camera and a point cloud image derived from a laser scanner is maintained by this method.

In an example, since no exposure signal is used, Δt is searched for by the following method. Here, Δt is estimated by moving one of the images along the time axis and by evaluating extent of overlap of the two images. Here, a case is explained in which the point cloud image based on laser scan point cloud is moved along the time axis.

As shown in Fig. 1, Δt corresponds to amount of moving Δx of the vehicle 100 during the term of Δt. Moving of vehicle 100 is measured by functions of the GNSS point measuring unit 103, the IMU 106, and the wheel encoder 107. According to these measured values, trajectory of movement related to the time of the vehicle 100 can be calculated.

Based on this trajectory of moving, as a position of the viewpoint from which the laser scan point cloud is seen, positions of the viewpoint at every 1 ms are calculated, for example, a position of viewpoint at T + 1 ms, a position of viewpoint at T + 2 ms, a position of viewpoint at T + 3 ms, etc. It should be noted that the position of the viewpoint can be calculated more finely in order to increase accuracy.

Then, point cloud images of which each position of the viewpoint thereof is moved every 1 ms are made, for example, a point cloud image viewed from the position at T + 1 ms, a point cloud image viewed from the position at T + 2 ms, a point cloud image viewed from the position at T + 3 ms, etc. It should be noted that the position of the viewpoint is set as the position of the projection origin of the camera 101, and direction of the visual line is accommodated to the optical axis of the camera 101.

Since the laser scan point cloud is distributed in the absolute coordinate system and the position of each point is fixed, a point cloud image of which the position of the viewpoint is changed can be calculated. Fig. 3 shows an image of the point cloud image in a case in which the viewpoint position is moved.

The abovementioned point cloud images, in which each viewpoint position thereof is gradually moved, are made per each 1 ms during T to T + 30 ms, for example. Here, the reason for limiting the upper limit to 30 ms is that the upper limit of Δt is estimated to be about 30 ms. This value is determined according to the performance of the camera used. Typically, the upper limit value is selected from about 25 ms to 50 ms.

Then, a superposed projection image is made by overlapping and projecting the photographed image by the camera 101 obtained by the photographing command (indication) at the time T together with each point cloud image viewed from the position at T + 1 ms, the point cloud image viewed from the position at T + 2 ms, the point cloud image viewed from the position at T + 3 ms, etc. In this case, about 30 layers of superposed projection images are made.

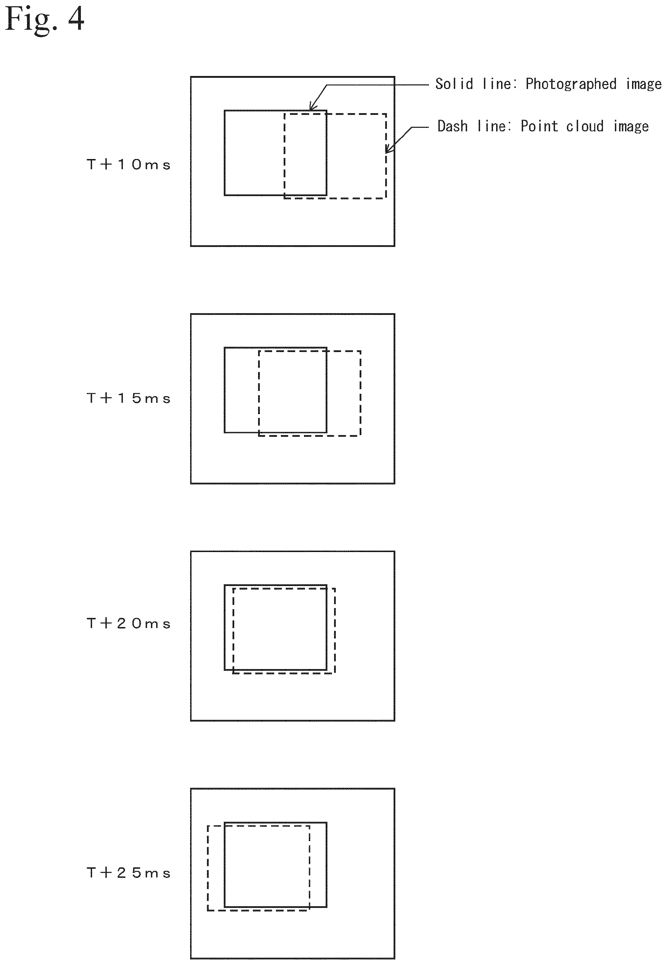

Fig. 4 is an image diagram of superposed projection images, each showing a condition of superposition of a point cloud image and a photographed image in a case in which the shifted time is varied. Here, the point cloud image is obtained in the manner shown in Fig. 3 based on the laser scan point cloud obtained by the laser scanner 102, and the photographed image is an image photographed by the camera 101.

To facilitate understanding, Fig. 4 shows a situation in which point cloud images are generated with each position of the viewpoint shifted every 5 ms and the photographed image and the point cloud images are overlapped and projected. By shifting each position of the viewpoint of the point cloud image, the extent of misalignment of the point cloud image and the photographed image photographed at the time T + Δt changes.

Fig. 4 shows that differences between the point cloud image and the photographed image are minimal in a case viewed from the viewpoint position corresponding to Δt = 20 ms. In this case, it is estimated that actual photographing was performed about 20 ms after outputting a photographing command signal, and Δt = 20 ms is obtained as a delay time.

In addition, in a case in which two photographing images are photographed from the same viewpoint and on the same visual line, these two photographed images overlap. Here, the superposed projection images in Fig. 4 are obtained in a condition in which each direction of the visual line is the same, although each viewpoint position of the point cloud image is gradually shifted. Therefore, in a situation in which misalignment of the point cloud image and the photographed image is minimal, differences between the viewpoint position of the point cloud image and the viewpoint position of the photographed image are also minimal. From here onwards, operation of Fig. 4 can also be understood as an operation searching for a viewpoint position of a photographed image (camera position) by searching for a viewpoint position of a point cloud image in which the point cloud image and the photographed image coincide.

In this way, the point cloud images in which each viewpoint position thereof is slightly shifted are made, and the point cloud images and the photographed image photographed by the camera 101 are compared, thereby enabling calculating an approximate value of the actual Δt. Furthermore, the camera position of the photographed image can be calculated. It should be noted that by further refining the difference of time shift, Δt can be calculated more accurately.

Here, although the method in which the point cloud image is shifted along the time axis is explained, instead the photographed image can be shifted along the time axis. In addition, a method is also acceptable in which both the point cloud image and the photographed image are shifted along the time axis.

As explained above, the actual Δt is estimated, thereby obtaining the delay time Δt, which is a term from the photographing command to the actual photographing. Value of Δt can be periodically updated by periodically obtaining Δt.

After Δt becomes obvious, a synchronizing process is performed. For example, a point cloud image based on laser scanning is shifted along the time axis, and an point cloud image viewed from a position at time T + Δt is obtained. Fig. 3 shows a case in which the viewpoint is shifted from the viewpoint position at time T to the viewpoint position at time T + Δt, that is, from the position X corresponding to the time T to the position X + Δx corresponding to the time T + Δt, thereby generating a point cloud image. In this way, viewpoints of point cloud images based on laser scans and photographed images can be aligned along the time axis, that is, synchronizing is possible.

In the above explanation, the case is explained in which Δt is obtained and viewpoint positions of point cloud images based on the Δt and/or photographed image are corrected by postprocessing after laser scanning and photographing; however, Δt can be calculated concurrently with laser scanning and photographing. In this case, after a step Δt is calculated, the photographing command signal with respect to the camera 101 can be output earlier, reflecting delay of Δt.

For example, in a case in which it is desired that the camera 101 photograph at time T, the photographing command signal is output to the camera 101 at time T - Δt, that is, a time Δt earlier than the time T. In this way, photographing is performed Δt after the output of the photographing command signal, that is, the camera 101 photographs just at the time T. In this way, a photographed image is obtained which is synchronized with the point cloud image made with reference to time T.

Alternatively, since the actual photographing is performed at the time T + Δt if the photographing command is at the time T, a point cloud image is generated with reference to the time T + Δt. In this way, the photographed image and the point cloud image can be synchronized.

### 1. First Embodiment

Fig. 1 shows vehicle 100, which is one example of a moving body. The vehicle 100 has mounted thereon the camera 101, the laser scanner 102, the GNSS position measuring unit 103, IMU (inertial measuring unit) 106, the wheel encoder 107, and operational unit 108.

The camera 101 is a digital still camera, and it takes photographs of static images. A camera for recording moving images can also be used. In this example, the camera 101 takes photographs of static images repeatedly at a specific time interval. In a case in which a moving image is recorded, frames of the moving image are used.

The laser scanner 102 obtains laser scan data by scanning a wide range or a specific range with laser light for distance measuring. For example, pulse laser light is scanned linearly along a vertical surface with a repetition frequency of from several kHz to several hundreds of kHz. By scanning in this way while vehicle 100 moves, laser scanning is performed in a specific range. A laser scanner can also be used in which multiple laser distance measuring beams, distributed in a planar, are irradiated simultaneously so that laser scan data in a specific range are simultaneously obtained.

The GNSS position measuring unit 103 measures a position in an absolute coordinate system (global coordinate system) based on navigation signals transmitted from a navigation satellite such as a GPS satellite. The absolute coordinate system is a coordinate system used in description of map information. In the absolute coordinate system, for example, a position in latitude, longitude, and altitude are specified. The IMU (inertia measuring unit) 106 measures change in acceleration and direction. The wheel encoder 107 detects rotation of a wheel of the vehicle 100, and measures travel distance (amount of movement) of the vehicle 100.

Based on changes in measured value by the GNSS position measuring unit 103, changes in acceleration and direction of the vehicle 100 measured by the IMU 106 and travel distance of the vehicle 100 measured by the wheel encoder 107, movement pathway and movement amount of the vehicle 100 linked to time and position are calculated. The GNSS position measuring unit 103 is equipped with a highly accurate clock, and time in the vehicle 100 is fixed by this clock.

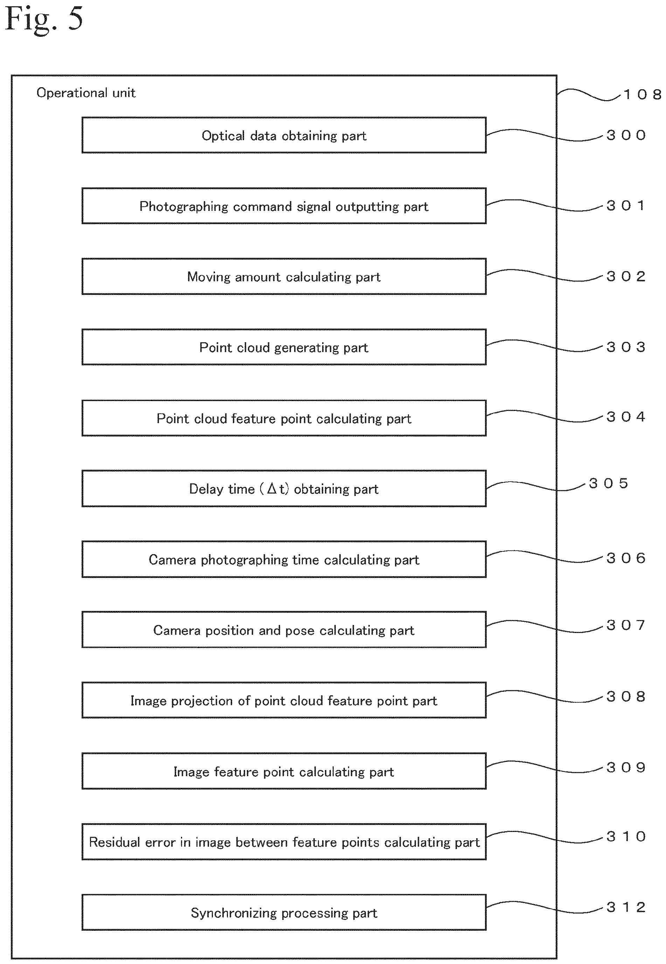

Fig. 5 shows a block diagram of the operational unit 108. The operational unit 108 is a computer, and includes a CPU, a data storage unit, an input-output interface, and a communicating unit. As the operational unit 108, a general PC (personal computer) can be used. The operational unit 108 can be constructed of dedicated hardware. An embodiment is also possible in which processes in the operational unit 108 are performed in a server. An embodiment is also possible in which functions of the operating unit 108 are dispersedly performed by multiple computers.

The operational unit 108 includes an optical data obtaining part 300, a photographing command signal outputting part 301, a movement amount calculating part 302, a point cloud generating part 303, a point cloud feature point calculating part 304, a delay time (Δt) obtaining part 305, a camera photographing time calculating part 306, a camera position and orientation calculating part 307, a point cloud feature point image projection part 308, an image feature point calculating part 309, a residual error in images between feature points calculating part 310, and a synchronizing processing part 312.

These function parts are realized by software implementation by a computer constructing the operational unit 108. One or more of the function parts shown in Fig. 5 can be constructed by dedicated hardware.

The optical data obtaining part 300 obtains image data of an image photographed by the camera 101 and laser scan data obtained by the laser scanner 102. Furthermore, the optical data obtaining part 300 obtains laser scan point cloud data based on the laser scan data obtained by the laser scanner 102.

The photographing command signal outputting part 301 outputs a signal commanding (instructing) camera 101 to take a photograph. For example, the photographing command signal commanding the camera 101 to photograph is output from the photographing command signal outputting part 301 at the time T shown in Fig. 1.

The movement amount calculating part 302 calculates movement amount and movement direction of the vehicle 100 based on change in position of the vehicle 100 measured by the GNSS position measuring unit 103, change in velocity and direction of the vehicle 100 measured by the IMU 106, and rotation frequency of wheels of the vehicle 100 measured by the wheel encoder 107. For example, the movement amount and the movement direction of the vehicle 100 in Δt, or per 1 ms, are calculated in Fig. 1. Since the GNSS position measuring unit 103 includes the clock, the calculated movement amount and the movement direction are linked to time.

The point cloud generating part 303 generates the laser scan point cloud based on the laser scan data obtained by the laser scanner 102. The laser scanner 102 measures a direction to the reflection point of laser scan light (a direction viewed from the laser scanner) and a distance to the reflection point, and outputs data of the direction and the distance to the reflection point as laser scan data. Based on the direction and the distance, three-dimensional coordinates of the reflection point (laser scan point) are calculated. This process is performed in the point cloud generating part 303. A class of the reflection points for which three-dimensional coordinates are calculated is the laser scan point cloud. It should be noted that as the laser scanner 102, one which directly outputs the laser scan point cloud can be employed.

The point cloud feature point calculating part 304 calculates feature points of an object described by the laser scan point cloud based on the laser scan point cloud generated by the point cloud generating part 303. For example, in the case of Fig. 1, feature points of a shape of building 200 are calculated, based on the laser scan point cloud of the building 200. Point cloud feature point images are made by imaging this feature point. This point cloud feature point image is an example of the point cloud image, and it is an image of feature points of an object derived from the laser scan data.

Two methods can be mentioned as a method to calculate feature points of the shape of the building 200. The first method is a method in which feature points of the building 200 are extracted from laser scan point clouds targeting the building 200. The second method is a method in which, based on the laser scan point cloud targeting the building 200, a three-dimensional model of the building 200 is made, and feature points of the building 200 are extracted from the three-dimensional model.

The delay time (Δt) obtaining part 305 obtains the delay time Δt which is a time from commanding the camera 101 to photograph (outputting the photographing command signal) to actually completion of photographing by the camera 101. The Δt is obtained by the methods explained in Figs. 1 to 4. Practically, by the method exemplified in Fig. 4, misalignment between the photographed image and the point cloud image is evaluated, and delay time Δt is obtained from a condition in which this misalignment is minimal.

The camera photographing time calculating part 306 calculates photographing time of the camera 101 based on the abovementioned Δt. For example, it is assumed that the photographing command signal is output with respect to the camera 101 at the time T in the clock used in the operational unit 108. In this case, time T + Δt is the time at which the camera 101 takes a photograph (photographing time).

The photographing time of the camera 101 can be calculated from the position of the viewpoint of the point cloud image searched for in the manner shown in Fig. 4. In the projection image exemplified in Fig. 4, at the step in which the point cloud image and the photographed image are made to conform to each other, the viewpoints of the point cloud image and that of the photographed image are made to conform to each other. Therefore, the position of a viewpoint of the point cloud image in this case is the photographing position (camera position) of the camera 101. Since the position of the camera 101 on the vehicle 100 is known and the relationship between moving trajectory and time of the vehicle 100 is obtained, if the photographing position of the camera 101 is known, the time of the position is also known. The time of the position is a time at which the camera 101 takes a photograph. In this case, if the photographing time by the camera 101 is T + Δt and the time at which the camera 101 is commanded to take photograph is T, the Δt can be calculated.

The camera position and orientation calculating part 307 calculates exterior orientation elements (position and orientation) of the camera 101 in the vehicle 100. This process is explained later below.

The point cloud feature point image projection part 308 projects the point cloud feature point image which is calculated by the point cloud feature point calculating part 304 based on the laser scan point cloud which is generated by the point cloud generating part 303, overlapping with the photographed image, so that a superposed projection image in which the two images are superposed is generated. Figs. 2 and 4 show examples of superposed projection images. In the process in Fig. 4, the point cloud image based on the laser scan point cloud is projected onto the photographed image photographed by the camera, so that extent of superposition of the two images is studied. According to the invention, the point cloud image itself is not used; instead, the point cloud feature point image in which an objective feature point is extracted from the laser scan point cloud is used as the point cloud image, and this image is projected onto the photographed image. According to the invention, an image feature point image is used, which is obtained by extracting the feature point from the photographed image, as the photographed image.

In the above step of the projection process, the exterior orientation elements of the laser scanner 102 and the camera 101 in the vehicle 100 is known. Therefore, the point cloud image based on the laser scan point cloud obtained by the laser scanner 102 can be generated by conforming to the optical axis direction of the image photographed by the camera 101, and by setting the position of the viewpoint at the projection origin (optical origin) of the camera 101.

It should be noted that the position of the camera 101 when a photograph is taken is unknown at this step since an unknown time delay Δt exists. Then, as explained below, positions of viewpoints of a point cloud image, which are assumed to be camera positions along the time axis, are multiply set, the camera 101 is assumed to exist there, and point cloud images are generated.

According to the invention, the projection of the above point cloud feature point image onto the image feature point image is performed shifting positions of the corresponding viewpoints in units of 1 ms. It should be noted that in Fig. 4, a case is shifted at a unit of 5 ms. While this is happening, since direction of the optical axis of the camera 101 is known at this step, the point cloud feature point image is generated in a condition in which direction of viewing line is made to conform to the direction of this optical axis.

The residual error in image between feature points calculating part 310 calculates residual error of the point cloud feature point image and the image feature point image which are superposed. Practically, extent of misalignment between two images, shown in Fig. 4, is calculated.

The image synchronizing processing part 312 performs the synchronizing process in which the point cloud image based on the laser scan point cloud obtained by the laser scanner 102 and the photographed image photographed by the camera 101 are synchronized based on the delay time obtained by the delay time obtaining part 305.

Multiple methods can be mentioned as the synchronizing process. The first method is a method in which the point cloud image is moved along the time axis so as to synchronized with the photographed image. For example, it is assumed that the camera 101 is commanded to photograph at the time T, and photographing is performed with delay Δt. In this case, by generating the point cloud image having a viewpoint at a position corresponding to time T + Δt, the point cloud image and the photographed image can be synchronized.

The second method of the synchronizing process is a method in which the photographed image is moved along the time axis. In this case, the image photographed at time T + Δt is converted to an image viewed from the viewpoint at time T. This conversion is performed by a projective transform, for example. In this way, the point cloud image derived from the laser scan data and the photographed image photographed by the camera 101 can be synchronized at the viewpoint at time T. It should be noted that an embodiment is possible in which both the point cloud image and the photographed image are moved along the time axis (moving of the viewpoint along the space axis).

The third method of the synchronizing process is a method in which, considering delay of photographing timing of the camera 101, a photographing command is output preliminarily, Δt early. For example, in a case of desiring photographing at time T, the photographing command signal is output to the camera 101 at the time T - Δt. In this case, the camera 101 photographs at time T, which is a delay of Δt after outputting the photographing command signal. In this case, synchronizing of the photographed image and the point cloud image generated at the viewpoint at time T is maintained.

### Example of Process

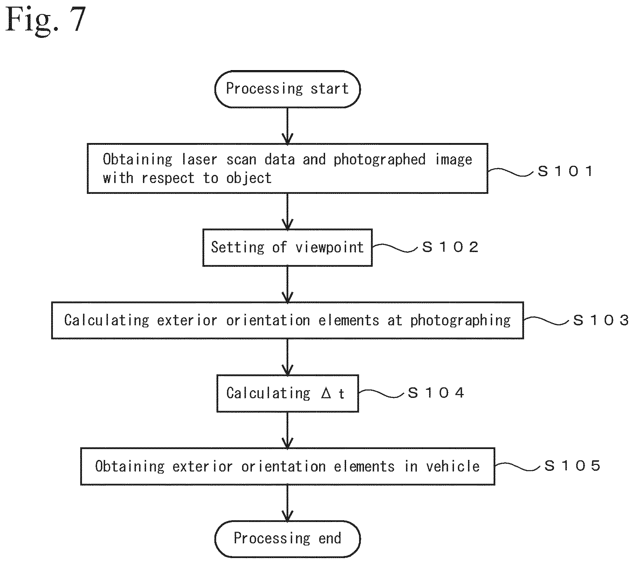

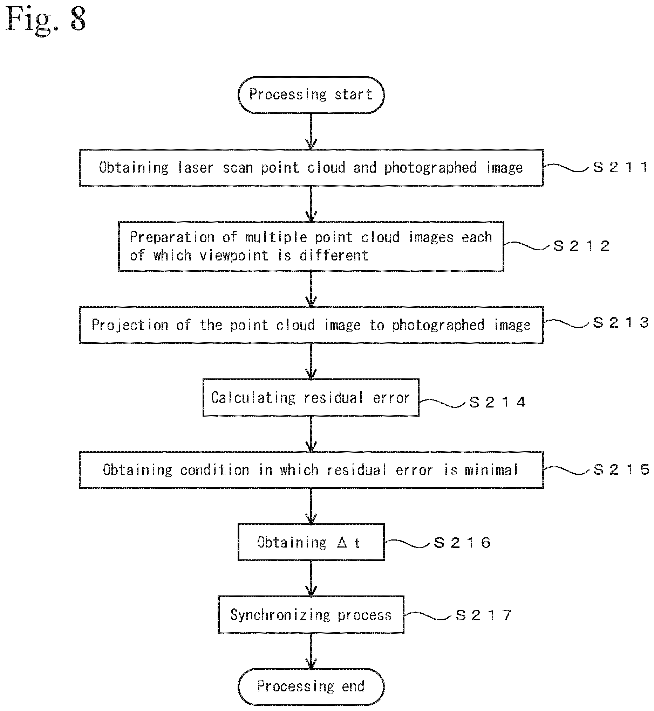

Hereinafter, an example of the process performed in the operational unit 108 is explained. Figs. 7 and 8 are flow chart diagrams showing an example of processing steps. A program for executing the process of Figs. 7 and 8 is stored in a storage unit of a PC constructing the operational unit 108, and is executed by a CPU of the PC. An embodiment is also possible in which the program is stored in an appropriate storage medium. An embodiment is also possible in which the program is stored in a server connected to the internet and is then downloaded to the PC for realizing the operational unit 108.

Here, it is assumed that the exterior orientation elements of the camera 101 in the vehicle 100 are unknown at the first step. First, the exterior orientation elements of the camera 101 in the vehicle 100 are calculated (see Fig. 7). It should be noted that the process shown in Fig. 7 is unnecessary if the exterior orientation elements of the camera 101 in the vehicle 100 are known.

Here, in an earlier step, it was assumed that position and orientation of the camera 101 in the vehicle 100 were fairly obvious. This assumes, for example, a case in which a user prepared the camera 101 and it is installed in the vehicle 100. In this case, the position for attaching the camera is preliminarily indicated, and the user sets the camera 101 there.

It is assumed that relationships of positions and orientations among the laser scanner 102, the GNSS position measuring unit 103, and the IMU 106 in the vehicle 100 are preliminarily understood. The position of the vehicle 100 can be understood by the position of the IMU 106.

First, in a condition in which the vehicle 100 is moved to the X axis direction shown in Fig. 1, laser scanning of the object (for example, the building 200) by the laser scanner 102 and photographing with respect to the same object by camera 101 are performed. While this is happening, position and change thereof of the vehicle 100 in the absolute coordinate system are measured by the GNSS position measuring unit 103 so that a moving pathway linked to time of the vehicle 100 is understood. In understanding of this moving pathway, measured values of the IMU 106 and the wheel encoder 107 are also utilized. Furthermore, by these measured values, a velocity vector of the vehicle 100 at each point of the moving pathway or at a specified time can be calculated.

After obtaining the photographed image and the laser scan data, the following process is performed by postprocessing. First, the photographed image taken by the camera 101 and the laser scan data by the laser scanner 102, both with respect to the same object, are obtained by the optical data obtaining part 301 (Step S101).

Then, based on the obtained laser scan data, the laser scan point cloud is made by the point cloud generating part 303. Next, as a pre-preparation of calculation of the exterior orientation elements of the camera 101, the viewpoint for preparation of a point cloud image is temporarily set (Step S102).

This viewpoint is an initial value for calculating the camera position of the objective photographed image. At this step, since the Δt is unknown, position of the viewpoint is also unknown. Therefore, here, an approximate value is set as the initial value. It should be noted that the camera position is understood to be a position of the projection origin of the camera used.

For example, a case is considered in which the camera 101 is commanded to photograph at time T. Here, maximal value of the delay time which is from the command (indication) of photographing to actual photographing is estimated at 30 ms. In this case, assuming the median value range of 30 ms, it is assumed that photographing was performed at T + 15 ms. That is, T + 15 ms is assumed as the photographing time.

Then, a position at which the camera 101 is assumed to be located at the time T + 15 ms is set as an assumed viewpoint position X₀₁.

Here, it is assumed that a position at which the camera 101 is arranged in the vehicle 100 is generally obvious. In this case, based on an approximate offset position of the camera 101 with respect to the IMU 106, an approximate position X₀ of the camera 101 at time T is obvious. Here, based on the position of the vehicle 100 at time T and the velocity vector V of the vehicle at time T, the position X₀ of the camera 101 in time T being the initial value, the position X₀₁ of the camera 101 at time T + 15 ms is calculated. Practically, X₀₁ is calculated by X₀₁ = X₀ + (V x 15 ms).

After setting the viewpoint position X₀₁ temporarily, a point cloud image is made, of which the previously prepared laser scan point cloud is viewed from the position..

Next, correspondence relationships between the point cloud image of which the laser scan point cloud is viewed from the viewpoint X₀₁ and the photographed image obtained when the camera 101 was commanded to photograph at the time T, is calculated.

Next, calculation of the exterior orientation elements of the camera 101 at the photographing time of the photographed image is performed. Hereinafter, the process is explained.

If the correspondence relationship of the point cloud image and the photographed image is obvious, each position in the absolute coordinate system of multiple points in the photographed image will also be obvious. Here, the multiple points in the photographed image of which the coordinates are obvious being reference points (orientation points), position of the camera 101 in the absolute coordinate system is calculated by the backward intersection method.

Furthermore, by studying the relationship between the optical axis direction of the camera 101 and direction of each point viewed from the projection origin, direction of the camera 101 in the absolute coordinate system can be calculated. This method is a basic method in single photograph orientation. Details of this process are disclosed, for example, in Japanese Unexamined Patent Application Publication No. 2016-57108.

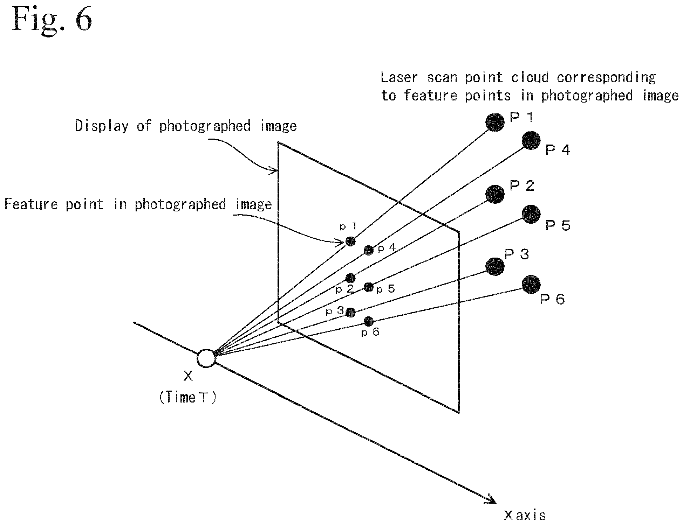

Hereinafter, a principle of the above method calculating position and orientation of the camera is simply explained. In Fig. 6, the camera locates the position X, p1 to p6 are feature points in display of the photographed image photographed by the camera 101, and P1 to P6 are points of the laser scan point cloud corresponding to the points p1 to p6. It should be noted that the position of the camera X is unknown, and interior orientation elements of the camera are known. Furthermore, the position of the camera is the projection origin (optical origin) of the camera.

Here, a direction line penetrating P1 and p1, a direction line penetrating P2 and p2, a direction line penetrating P3 and p3, and the like, are made. A point at which these direction lines intersect is the position of the camera X. Using this principle, position (viewpoint of photographing) X₁ of the camera 101 at photographing of the photographed image which is the object here, is calculated. Furthermore, a line penetrating the position X₁ and the center of display corresponds to optical axis of the camera. Based on the relationship of this optical axis and the above direction line, orientation of the camera at the camera position X₁ can be calculated.

It should be noted that in a case in which an intersecting point of the above multiple direction lines cannot be determined, or in a case in which a range of intersecting the multiple direction lines is greater than a preliminarily determined range, value of the camera position X₀ at time T is changed, and calculation is performed again. Instead of the method of the recalculation with changing the value of the camera position X₀, or in addition to the recalculation method, a method is possible in which the correspondence relationship of the feature point in the photographed image and the feature point in the point cloud image is re-evaluated and then recalculation is performed. By determining the intersecting point of the above multiple direction lines, or by searching X₁ of which the range of intersecting the multiple direction lines is within the preliminarily determined range, the position X₁ of the camera 101 at time T + Δt being closer to the true value (actual photographing time) can be calculated.

In this way, in the case in which the camera 101 is commanded to take a photograph at time T, the exterior orientation elements (position and orientation) of the camera 101 in photographing performed with a delay of Δt can be calculated (Step S103). This process is performed in the camera position and orientation calculating part 308.

It should be noted that exterior orientation elements of the camera 101 obtained in this step are values in the absolute coordinate system.

In this step, the exterior orientation elements of the camera 101 in the vehicle 100 are unknown. This is because in this step, Δt is unknown, photographing time of the photographed image is unknown, and the position of the vehicle 100 at this photographing time is unknown.

Next, calculation of Δt is performed (Step S104). The Δt is calculated as follows.

Here, if the position of the camera 101 at the time T at which photographing is commanded is assumed to be X₀, since the time at which photographing is performed by the camera 101 is T + Δt and the camera position at the time is X₁, time required for the vehicle 100 (camera 101) to move from X₀ to X₁ corresponds to Δt.

Here, if velocity of the vehicle 100 at the time T is velocity V, equation V = (X₁ - X₀)/Δt is true. That is, Δt can be calculated from Δt = (X₁ - X₀)/V. This calculation is performed in the delay time (Δt) obtaining part 305.

Here, X₁ is the photographing position (camera position) of the camera 101 calculated by the principle of Fig. 6. X₀ is the position of the camera 101 at the time T which is assumed to be the initial condition of calculation of X₁. The velocity V of the vehicle 100 is that at time T.

In addition, since the velocity vector of the vehicle 100 at the time T can be calculated based on measured values obtained from the GNSS position measuring unit 103, the IMU 106, and the wheel encoder 108, the above V can be calculated from these measured values.

After calculating Δt, the exterior orientation elements (position and orientation) of the camera 101 in the vehicle 100 at the photographing time T₁ = T + Δt of the photographed image which is focused on here is calculated (Step S105).

That is, by calculating Δt, the actual photographing time T₁ = T + Δt of the camera 101 will be obvious. As a result, the position of the vehicle 100 at the time T₁, that is, the position of the vehicle 100 at the time of photographing by the camera 101 can be known. In addition, the orientation of the vehicle 100 can be known based on the measured data by the IMU 106 at the time T₁. Then, the position of the camera 101 in the vehicle 100 can be known based on the relationship of the position of the vehicle 100 at the time T₁ and the position X₁ of the camera 101 at the time T₁.

Furthermore, the orientation of the camera 101 in the absolute coordinate system at the time T₁ is calculated in the step S106. Therefore, the orientation of the camera 101 in the vehicle 100 can be known based on relationships of the orientation of the vehicle 100 in the absolute coordinate system at the time T₁ and the orientation of the camera 101 in the absolute coordinate system at the time T₁. In this way, the exterior orientation elements (position and orientation) of the camera 101 in the vehicle 100 are calculated. These processes are performed in the camera position and orientation calculating part 307.

Next, with reference to Fig. 8, a process is explained in which the image photographed by the camera 101 and the point cloud image based on the laser scan data obtained by the laser scanner 102 are synchronized. It should be noted that the process of Fig. 8 is performed under conditions in which the exterior orientation elements of the camera 101 in the vehicle 100 are known.

First, data of the laser scan point cloud obtained by the laser scanner 102 and photographed image data (image data) photographed by the camera 101 based on the command outputted at a specific time T are obtained (Step S211). Here, mutually corresponding laser scan data point cloud and photographed image which overlap with respect to the same object are obtained.

Next, based on the laser scan point cloud, multiple point cloud images from positions of multiple viewpoints are made (Step S212). For example, a point cloud image viewed from a viewpoint of a position of time T + 1 ms, a point cloud image viewed from a viewpoint of a position of time T + 2 ms, a point cloud image viewed from a viewpoint of a position of time T + 3 ms, ... , and a point cloud image viewed from a viewpoint of a position of time T + 30 ms are made.

As a result, the point cloud images, each shifted slightly along the time axis as shown in Fig. 4, for example, are made. Next, the point cloud image made in the step S212 is projected onto the photographed image photographed by the camera 101 (Step S213). By this projection, a superposed projection image is made. It should be noted that in an actual process, a point cloud feature point image of which feature points are extracted from the point cloud image derived from the laser scan is projected onto an image of image feature points obtained from the photographed image.

Next, a residual error in the projection display between the point cloud image derived from the laser scan by the laser scanner 102 and the photographed image by the camera 101 is calculated (Step S214), and a condition in which this residual error becomes minimal is obtained (Step S 215). For example, in a case of the projection images of four patterns in Fig. 4, the case of T + 20 ms is the case in which the residual error is minimal.

Then, Δt value under the condition obtained in the step S215 is obtained (Step S216). In the case of Fig. 4, Δt = 20 ms is obtained. Finally, based on the Δt obtained in the step S216, the synchronizing process is performed (Step S217). According to this synchronizing process, synchronizing of the point cloud image derived from the laser scan by the laser scanner 102 and the image photographed by the camera 101 is maintained.

### Advantages

In the present embodiment, an exposure signal from the camera 101 is not necessary. Just a photographing signal to command photographing is output to the camera 101. Therefore, various kinds of camera can be used as the camera 101. Furthermore, hardware for handling the exposure signal is not necessary, thereby reducing cost. In addition, degree of freedom and facility of setting are improved in a case in which a camera prepared by a user is used.

### Other Matters

An interval between photographing can be freely set. A frame image constructing moving image can be used as the photographed image used in the present invention. Calculation of delay time (time offset) Δt can be performed regularly. In this case, the Δt is renewed regularly.

The moving body is not limited to a car, and it can be an airplane or a ship. The moving body can be manned or unmanned.

In the superposed projection image in which the photographed image photographed by the camera and the point cloud image derived from the laser scan point cloud are superposed exemplified in Fig. 4, as a judgement of difference of overlapping degree between the photographed image and the point cloud image, a condition in which the difference is not greater than a predetermined threshold value is acceptable. For example, the Δt can be calculated in a condition in which the difference of overlapping degree of the both images is not greater than 1 %. This threshold value can be determined based on density of the point cloud or resolution required.

### 2. Second Embodiment

A range of viewpoints of the point cloud image made in the step S212 in Fig. 8 can be determined based on the exterior orientation elements of the camera 101 obtained in the process in Fig. 7. As mentioned above, by calculating the exterior orientation elements of the camera 101, the delay time Δt which is from commanding the camera 101 to take a photograph to actually taking a photograph can be obtained.

This Δt is not always constant; however, it is unlikely that Δt varies greatly. Then, regarding the Δt calculated from the exterior orientation elements as a reference value, a range of positions of the viewpoint depending on time of the point cloud image (a range of position of the viewpoint) exemplified in Fig. 4, is determined.

For example, it is assumed that Δt regarding the camera 101 calculated from exterior orientation elements at a specific time is Δt = 15 ms. In addition, it is assumed that a range of variation of the Δt is about 10 ms. In this case, the range of setting of time of the viewpoint position exemplified in Fig. 4 is set T + 10 ms to T +20 ms.

According to this embodiment, the viewpoint range in preparing the point cloud image derived from the laser scan point cloud of which a viewpoint position is changed (a range of delay time which is set temporarily) can be narrowly focused. In addition, by focusing this range narrowly, the viewpoint position can be set more finely, and accuracy of the Δt which is finally calculated can be increased. In addition, redundant operation can be reduced.

### 3. Third Embodiment

There is a case in which Δt varies if a setting is changed, depending on the camera. As the change in setting, change in exposure time, change in continuous photographing speed, change in resolution, change in optical magnification, change in electric power consumption or the like may be mentioned.

In a case in which such a setting is changed, taking this opportunity, the process regarding obtaining the Δt is executed. In this way, change in Δt can be handled.

Furthermore, in a case in which multiple cameras are used, an embodiment is also effective in which switching of the camera may be used as an opportunity for executing the process of obtaining Δt.

### Explanation of Reference Numerals

100: vehicle, 101: camera, 102: laser scanner, 103: GNSS position measuring unit, 106: IMU, 107: wheel encoder, 108: operational unit.

## Claims

1. An optical data processing apparatus comprising:
an optical data obtaining part (300) which obtains a laser scan point cloud obtained by a laser scanner mounted on a moving body in a moving condition and image data of a photographed image photographed by a camera mounted on the moving body in a moving condition;
a point cloud feature point calculating part (304) that extracts, from the laser scan point cloud, feature points of an object from which the laser scan point cloud is obtained, and then calculates a point cloud feature point image by imaging the extracted feature points;
a delay time obtaining part (305) that obtains Δt when the camera photographs with a delay Δt when the camera is commanded to take a photograph at a time T; and
a projection part (308) which makes a projection image, the projection image made by overlapping and projecting the point cloud feature point image as viewed from a specific viewpoint and an image feature point image, in a state in which directions of viewing lines are aligned, the image feature point image obtained by extracting feature points from the photographed image,
wherein relationships of exterior orientation elements of the laser scanner and the camera in the moving body are known,
the projections are performed multiple times by changing a viewpoint position of at least one of the point cloud feature point image and the image feature point image so that multiple projection images are made, and
Δt is calculated in conditions in which difference in overlapping degree of the point cloud feature point image and the image feature point image in the multiple made projection images is minimal or is not greater than a threshold value.

2. The optical data processing apparatus according to claim 1, wherein
the apparatus further comprises a camera position calculating part which calculates camera position in photographing of the photographed image by a single photograph orientation based on correspondence relationships of the laser scan point cloud and the photographed image,
a reference value of Δt is calculated based on difference between a time at which a command for photographing the photographed image is output and a time the camera position is calculated, and
a range of viewpoint positions is selected based on the reference value of Δt.

3. The optical data processing apparatus according to claim 2, wherein a specific range having a center position corresponding to the reference value of Δt is selected as the range of viewpoints.

4. The optical data processing apparatus according to claim 1, wherein the point cloud feature point image is calculated by extracting feature points that characterize a shape of a three-dimensional model generated based on the laser scan point cloud.

5. The optical data processing apparatus according to any one of claims 1 to 4, wherein each time a setting of a camera is changed, Δt is obtained.

6. An optical data processing method comprising:
a step of obtaining a laser scan point cloud obtained by a laser scanner mounted on a moving body in a moving condition, and image data of a photographed image photographed by a camera mounted on the moving body in a moving condition;
a step of extracting, from the laser scan point cloud, feature points of an object from which the laser scan point cloud is obtained, and then calculating a point cloud feature point image by imaging the extracted feature points;
a step of obtaining Δt when the camera photographs with a delay Δt when the camera is commanded to take a photograph at time T; and
a step of making a projection image, the projection image made by overlapping and projecting the point cloud feature point image as viewed from a specific viewpoint and an image feature point image, in a state in which directions of viewing lines are aligned, the image feature point image obtained by extracting feature points from the photographed image,
wherein relationships of exterior orientation elements of the laser scanner and the camera on the moving body are known,
projection is performed multiple times by changing viewpoint position of at least one of the point cloud feature point image and the image feature point image so that multiple projection images are made, and
Δt is calculated in a condition in which difference in overlapping degree of the point cloud feature point image and the image feature point image in the multiple made projection images is minimal or is not greater than a threshold value.

7. An optical data processing program, which is a program read by a computer so that the computer executes the following steps, comprising:
a step of obtaining a laser scan point cloud obtained by a laser scanner mounted on a moving body in a moving condition and image data of a photographed image photographed by a camera mounted on the moving body in a moving condition;
a step of extracting, from the laser scan point cloud, feature points of an object from which the laser scan point cloud is obtained, and then calculating a point cloud feature point image by imaging the extracted feature points;
a step of obtaining Δt in a case in which the camera photographs with a delay Δt when the camera is commanded to take a photograph at time T, and
a step of making a projection image, the projection image made by overlapping and projecting the point cloud feature point image as viewed from a specific viewpoint and an image feature point image, in a state in which directions of viewing lines are aligned, the image feature point image obtained by extracting feature points from the photographed image,
wherein relationships of exterior orientation elements of the laser scanner and the camera on the moving body are known,
projection is performed multiple times by changing viewpoint position of at least one of the point cloud feature point image and the image feature point image so that multiple projection images are made, and
Δt is calculated in a condition in which difference in overlapping degree of the point cloud feature point image and the image feature point image in the multiple made projection images is minimal or is not greater than a threshold value.

## Patentansprüche

1. Optische Datenverarbeitungsvorrichtung, umfassend:
einen optischen Datenerfassungsteil (300), der eine Laserscan-Punktwolke, die durch einen Laserscanner, der an einem sich bewegenden Körper angebracht ist, in einem sich bewegenden Zustand erhalten wird, und Bilddaten eines fotografierten Bildes, das durch eine Kamera, die an dem sich bewegenden Körper angebracht ist, in einem sich bewegenden Zustand fotografiert wurde, erhält;
einen Punktwolken-Merkmalspunkt-Berechnungsteil (304), der aus der Laserscan-Punktwolke Merkmalspunkte eines Objekts, von dem die Laserscan-Punktwolke erhalten wurde, extrahiert, und dann ein Punktwolken-Merkmalspunktbild durch Abbilden der extrahierten Merkmalspunkte berechnet;
einen Verzögerungszeit-Erhalteteil (305), der Δt erhält, wenn die Kamera mit einer Verzögerung Δt fotografiert, wenn der Kamera befohlen wird, zu einem Zeitpunkt T eine Fotografie aufzunehmen; und
einen Projektionsteil (308), der ein Projektionsbild erzeugt, wobei das Projektionsbild durch Überlagern und Projizieren des Punktwolken-Merkmalspunktbildes, wie es von einem bestimmten Blickpunkt aus gesehen wird, und eines Bildmerkmalspunktbildes in einem Zustand erzeugt wird, in dem Richtungen von Blicklinien ausgerichtet sind, wobei das Bildmerkmalspunktbild durch Extrahieren von Merkmalspunkten aus dem fotografierten Bild erhalten wird,
wobei Beziehungen zwischen äußeren Orientierungselementen des Laserscanners und der Kamera auf dem beweglichen Körper bekannt sind,
wobei die Projektionen mehrfach durchgeführt werden, indem eine Blickpunktposition von zumindest einem des Punktwolken-Merkmalspunktbildes und des Bildmerkmalspunktbildes geändert wird, so dass mehrere Projektionsbilder erzeugt werden, und
wobei Δt unter Bedingungen berechnet wird, unter denen ein Unterschied im Überlappungsgrad des Punktwolken-Merkmalspunktbildes und des Bildmerkmalspunktbildes in den mehreren erzeugten Projektionsbildern minimal oder nicht größer als ein Schwellenwert ist.

2. Optische Datenverarbeitungsvorrichtung nach Anspruch 1, wobei
die Vorrichtung des Weiteren einen Kamerapositionsberechnungsteil umfasst, der eine Kameraposition beim Fotografieren des fotografierten Bildes durch eine Einzelfotoausrichtung auf der Grundlage von Korrespondenzbeziehungen der Laserscan-Punktwolke und des fotografierten Bildes berechnet,
ein Referenzwert von Δt auf der Grundlage einer Differenz zwischen einem Zeitpunkt, zu dem ein Befehl zum Fotografieren des fotografierten Bildes ausgegeben wird, und einem Zeitpunkt, zu dem die Kameraposition berechnet wird, berechnet wird, und
ein Bereich von Blickpunktpositionen auf der Grundlage des Referenzwerts von Δt ausgewählt wird.

3. Optische Datenverarbeitungsvorrichtung nach Anspruch 2, wobei ein spezifischer Bereich mit einer Mittelposition, die zu dem Referenzwert von Δt korrespondiert, als der Bereich von Blickpunkten ausgewählt wird.

4. Optische Datenverarbeitungsvorrichtung nach Anspruch 1, wobei das Punktwolken-Merkmalspunktbild durch Extrahieren von Merkmalspunkten berechnet wird, die eine Form eines dreidimensionalen Modells charakterisieren, das auf der Grundlage der Laserscan-Punktwolke erzeugt wurde.

5. Optische Datenverarbeitungsvorrichtung nach einem der Ansprüche 1 bis 4, wobei jedes Mal, wenn eine Einstellung einer Kamera geändert wird, Δt erhalten wird.

6. Optisches Datenverarbeitungsverfahren, umfassend:
einen Schritt des Erhaltens einer Laserscan-Punktwolke, die durch einen Laserscanner, der an einem sich bewegenden Körper angebracht ist, in einem sich bewegenden Zustand erhalten wird, und von Bilddaten eines fotografierten Bildes, das durch eine Kamera, die an dem sich bewegenden Körper angebracht ist, in einem sich bewegenden Zustand fotografiert wurde;
einen Schritt des Extrahierens, aus der Laserscan-Punktwolke, von Merkmalspunkten eines Objekts, von dem die Laserscan-Punktwolke erhalten wurde, und dann des Berechnens eines Punktwolken-Merkmalspunktbildes durch Abbilden der extrahierten Merkmalspunkte;
einen Schritt des Erhaltens von Δt, wenn die Kamera mit einer Verzögerung Δt fotografiert, wenn der Kamera befohlen wird, zum Zeitpunkt T eine Fotografie aufzunehmen; und
einen Schritt des Erzeugens eines Projektionsbildes, wobei das Projektionsbild durch Überlagern und Projizieren des Punktwolken-Merkmalspunktbildes, wie es von einem bestimmten Blickpunkt aus gesehen wird, und eines Bildmerkmalspunktbildes in einem Zustand erzeugt wird, in dem Richtungen von Blicklinien ausgerichtet sind, wobei das Bildmerkmalspunktbild durch Extrahieren von Merkmalspunkten aus dem fotografierten Bild erhalten wird,
wobei Beziehungen zwischen äußeren Orientierungselementen des Laserscanners und der Kamera auf dem beweglichen Körper bekannt sind,
wobei die Projektion mehrfach durchgeführt wird, indem eine Blickpunktposition von zumindest einem des Punktwolken-Merkmalspunktbildes und des Bildmerkmalspunktbildes geändert wird, so dass mehrere Projektionsbilder erzeugt werden, und
Δt unter einer Bedingung berechnet wird, unter der ein Unterschied im Überlappungsgrad des Punktwolken-Merkmalspunktbildes und des Bildmerkmalspunktbildes in den mehreren erzeugten Projektionsbildern minimal oder nicht größer als ein Schwellenwert ist.

7. Optisches Datenverarbeitungsprogramm, das ein Programm ist, das von einem Computer gelesen wird, so dass der Computer die folgenden Schritte ausführt, umfassend:
einen Schritt des Erhaltens einer Laserscan-Punktwolke, die durch einen Laserscanner, der an einem sich bewegenden Körper angebracht ist, in einem sich bewegenden Zustand erhalten wird, und von Bilddaten eines fotografierten Bildes, das durch eine Kamera, die an dem sich bewegenden Körper angebracht ist, in einem sich bewegenden Zustand fotografiert wurde;
einen Schritt des Extrahierens, aus der Laserscan-Punktwolke, von Merkmalspunkten eines Objekts, von dem die Laserscan-Punktwolke erhalten wurde, und dann des Berechnens eines Punktwolken-Merkmalspunktbildes durch Abbilden der extrahierten Merkmalspunkte;
einen Schritt des Erhaltens von Δt, in einem Fall, in dem die Kamera mit einer Verzögerung Δt fotografiert, wenn der Kamera befohlen wird, zum Zeitpunkt Teine Fotografie aufzunehmen; und
einen Schritt des Erzeugens eines Projektionsbildes, wobei das Projektionsbild durch Überlagern und Projizieren des Punktwolken-Merkmalspunktbildes, wie es von einem bestimmten Blickpunkt aus gesehen wird, und eines Bildmerkmalspunktbildes in einem Zustand erzeugt wird, in dem Richtungen von Blicklinien ausgerichtet sind, wobei das Bildmerkmalspunktbild durch Extrahieren von Merkmalspunkten aus dem fotografierten Bild erhalten wird,
wobei Beziehungen zwischen äußeren Orientierungselementen des Laserscanners und der Kamera auf dem beweglichen Körper bekannt sind,
wobei die Projektion mehrfach durchgeführt wird, indem eine Blickpunktposition von zumindest einem des Punktwolken-Merkmalspunktbildes und des Bildmerkmalspunktbildes geändert wird, so dass mehrere Projektionsbilder erzeugt werden, und
Δt unter einer Bedingung berechnet wird, unter der ein Unterschied im Überlappungsgrad des Punktwolken-Merkmalspunktbildes und des Bildmerkmalspunktbildes in den mehreren erzeugten Projektionsbildern minimal oder nicht größer als ein Schwellenwert ist.

## Revendications

1. Dispositif de traitement de données optiques comprenant:
une partie d'obtention de données optiques (300) qui obtient un nuage de points de balayage laser obtenu par un scanner laser monté sur un corps en mouvement, dans une condition de déplacement, et des données d'image d'une image photographiée qui a été photographiée par une caméra montée sur le corps en mouvement, dans une condition de déplacement;
une partie de calcul de points caractéristiques de nuage de points (304) qui extrait, à partir du nuage de points de balayage laser, des points caractéristiques d'un objet à partir duquel le nuage de points de balayage laser est obtenu, et puis calcule une image de points caractéristiques de nuage de points en imageant les points caractéristiques extraits;
une partie d'obtention de temps de retard (305) qui obtient Δt lorsque la caméra photographie avec un retard Δt, lorsque la caméra reçoit l'ordre de prendre une photographie à un instant T; et
une partie de projection (308) qui réalise une image de projection, l'image de projection étant réalisée en superposant et en projetant l'image de points caractéristiques de nuage de points telle que vue à partir d'un point de vue spécifique et une image de points caractéristiques d'image, dans un état dans lequel des directions de lignes de visualisation sont alignées, l'image de point caractéristique d'image étant obtenue en extrayant des points caractéristiques de l'image photographiée,
dans lequel des relations d'éléments d'orientation extérieurs du scanner laser et de la caméra sur le corps en mouvement sont connues,
dans lequel les projections sont effectuées plusieurs fois en changeant une position de point de vue d'au moins l'une de l'image de points caractéristiques de nuage de points et de l'image de points caractéristiques d'image de sorte que plusieurs images de projection soient réalisées, et
Δt est calculé dans des conditions dans lesquelles une différence de degré de chevauchement de l'image de points caractéristiques de nuage de points et de l'image de points caractéristiques d'image dans les multiples images de projection réalisées est minimale ou n'est pas supérieure à une valeur de seuil.

2. Dispositif de traitement de données optiques selon la revendication 1, dans lequel
le dispositif comprend en outre une partie de calcul de position de caméra qui calcule une position de la caméra lors de la photographie de l'image photographiée par une seule orientation de photographie sur la base de relations de correspondance du nuage de points de balayage laser et de l'image photographiée,
une valeur de référence de Δt est calculée sur la base d'une différence entre un moment auquel une commande de photographie de l'image photographiée est émise et un moment où la position de la caméra est calculée, et
une plage de positions de points de vue est sélectionnée sur la base de la valeur de référence de Δt.

3. Dispositif de traitement de données optiques selon la revendication 2, dans lequel une plage spécifique ayant une position centrale correspondant à la valeur de référence de Δt est sélectionnée en tant que plage de points de vue.

4. Dispositif de traitement de données optiques selon la revendication 1, dans lequel l'image de points caractéristiques de nuage de points est calculée en extrayant des points caractéristiques qui caractérisent une forme d'un modèle tridimensionnel généré sur la base du nuage de points de balayage laser.

5. Dispositif de traitement de données optiques selon l'une quelconque des revendications 1 à 4, dans lequel, chaque fois qu'un réglage d'une caméra est modifié, Δt est obtenu.

6. Procédé de traitement de données optiques comprenant:
une étape consistant à obtenir un nuage de points de balayage laser obtenu par un scanner laser monté sur un corps en mouvement, dans une condition de déplacement, et des données d'image d'une image photographiée qui a été photographiée par une caméra montée sur le corps en mouvement, dans une condition de déplacement;
une étape consistant à extraire, à partir du nuage de points de balayage laser, des points caractéristiques d'un objet à partir duquel le nuage de points de balayage laser est obtenu, et puis à calculer une image de points caractéristiques de nuage de points en imageant les points caractéristiques extraits;
une étape consistant à obtenir Δt lorsque la caméra photographie avec un retard Δt, lorsque la caméra reçoit l'ordre de prendre une photographie à un instant T; et
une étape consistant à réaliser une image de projection, l'image de projection étant réalisée en superposant et en projetant l'image de points caractéristiques de nuage de points telle que vue à partir d'un point de vue spécifique et une image de points caractéristiques d'image, dans un état dans lequel des directions de lignes de visualisation sont alignées, l'image de points caractéristiques d'image étant obtenue en extrayant des points caractéristiques de l'image photographiée,
dans lequel des relations d'éléments d'orientation extérieurs du scanner laser et de la caméra sur le corps en mouvement sont connues,
dans lequel la projection est effectuée plusieurs fois en changeant une position de point de vue d'au moins l'une de l'image de points caractéristiques de nuage de points et de l'image de points caractéristiques d'image de sorte que plusieurs images de projection soient réalisées, et
Δt est calculé dans une condition dans laquelle une différence de degré de chevauchement de l'image de points caractéristiques de nuage de points et de l'image de points caractéristiques d'image dans les multiples images de projection réalisées est minimale ou n'est pas supérieure à une valeur de seuil.

7. Programme de traitement de données optiques qui est un programme lu par un ordinateur de sorte que l'ordinateur exécute les étapes suivantes, comprenant:
une étape consistant à obtenir un nuage de points de balayage laser obtenu par un scanner laser monté sur un corps en mouvement, dans une condition de déplacement, et des données d'image d'une image photographiée qui a été photographiée par une caméra montée sur le corps en mouvement, dans une condition de déplacement;
une étape consistant à extraire, à partir du nuage de points de balayage laser, des points caractéristiques d'un objet à partir duquel le nuage de points de balayage laser est obtenu,et puis à calculer une image de points caractéristiques de nuage de points en imageant les points caractéristiques extraits;
une étape consistant à obtenir Δt dans un cas où la caméra photographie avec un retard Δt, lorsque la caméra reçoit l'ordre de prendre une photographie à un instant T; et
une étape consistant à réaliser une image de projection, l'image de projection étant réalisée en superposant et en projetant l'image de points caractéristiques de nuage de points telle que vue à partir d'un point de vue spécifique et une image de points caractéristiques d'image, dans un état dans lequel des directions de lignes de visualisation sont alignées, l'image de points caractéristiques d'image étant obtenue en extrayant des points caractéristiques de l'image photographiée,
dans lequel des relations d'éléments d'orientation extérieurs du scanner laser et de la caméra sur le corps en mouvement sont connues,
dans lequel la projection est effectuée plusieurs fois en changeant une position de point de vue d'au moins l'une de l'image de points caractéristiques de nuage de points et de l'image de points caractéristiques d'image de sorte que plusieurs images de projection soient réalisées, et
Δt est calculé dans une condition dans laquelle une différence de degré de chevauchement de l'image de points caractéristiques de nuage de points et de l'image de points caractéristiques d'image dans les multiples images de projection réalisées est minimale ou n'est pas supérieure à une valeur de seuil.
